# FASCICULE DE BREVET EUROPEEN

(11) **EP 0 435 731 B1**
(45) Date de publication et mention de la délivrance du brevet: **29.09.1993**
(21) Numéro de dépôt: 90403569.8
(22) Date de dépôt: 13.12.1990
(51) Int. Cl.: G01N 21/72

(54) **Brûleur utilisable dans un appareil pour l'analyse d'une composition gazeuse par spectrophotométrie de flamme**
Brenner zum Gebrauch in einer Vorrichtung zum flammenspektralphotometrischen Analysieren einer Gaszusammensetzung
Burner used in an instrument for analysing a gaseous composition by means of flame spectrophotometry

(30) Priorité: 18.12.1989 FR 8916876
(43) Date de publication de la demande: 03.07.1991
(73) Titulaire: ETAT FRANCAIS Représenté par le délégué général pour l'armement, F-75996 Paris Armées (FR); PROENGIN S.A., 78210 Saint-Cyr-l'Ecole (FR)
(72) Inventeur: Suzanne, Pierre, F-91490 Oncy Sur Ecole (FR); Bleuse, Patrick, F-59530 Le Quesnoy (FR); Guene, Gilles, F-78990 Elancourt (FR); Clausin, Pierre, F-92410 Ville D'Avray (FR)
(74) Mandataire: de Saint-Palais, Arnaud Marie

(56) Documents cités:
- WO-A-88/06727
- FR-A- 1 462 611
- US-A- 3 644 743

## Description

La présente invention concerne un brûleur utilisable dans un appareil pour l'analyse d'une composition gazeuse par spectrophotométrie de flamme, ladite composition gazeuse pouvant consister en un mélange de gaz incluant éventuellement des particules ou des vésicules en suspension.

On sait que ce procédé consiste à effectuer une analyse spectrophotographique du rayonnement produit par la flamme d'un mélange gazeux incluant les éléments à analyser. Cette analyse peut être effectuée en isolant les radiations caractéristiques des éléments recherchés et en effectuant la mesure, par voie photométrique de l'intensité de ces radiations.

Dans le cas de l'analyse de l'air ambiant, la flamme est habituellement obtenue par la combustion, à l'intérieur d'un brûleur, d'un courant d'hydrogène à débit constant, dans le flux d'air à analyser.

L'invention a plus particulièrement pour but, mais non exclusivement, la réalisation d'un brûleur de ce genre, utilisable dans un appareil portatif permettant la mesure instantanée, avec lecture directe, de la teneur d'éléments gazeux contenus dans l'air ambiant.

Bien entendu, les appareils de cette catégorie, dont l'un se trouve décrit dans le brevet FR No 87 02762 au nom de la Société PROENGIN S.A., doivent présenter des dimensions aussi réduites que possible, de manière à être facilement portés à la main et manipulés sur le site.

Par ailleurs, ils doivent être conçus de manière à pouvoir être utilisés dans des milieux dont les paramètres peuvent varier d'une façon considérable, qu'il s'agisse de la température (-32°C - +55°C) de l'humidité, de la pureté de l'air (taux de particules en suspension), du pouvoir contaminant des substances contenant l'élément recherché, etc...

En outre, ces appareils doivent présenter un temps de réponse aussi court que possible (non seulement entre l'instant marquant le début du prélèvement et le moment où la teneur en élément recherché est indiquée, mais encore entre la fin d'un prélèvement et le moment où les conditions initiales sont rétablies).

Il s'avère, qu'à l'heure actuelle, aucun des appareils disponibles dans le commerce ne satisfait à toutes ces exigences.

L'invention a plus particulièrement pour but de combler cette lacune.

Elle propose, à cet effet, un brûleur spécialement conçu de manière à permettre la réalisation d'un appareil répondant aux principaux critères précédemment évoqués, pour les raisons qui seront exposées dans la suite.

Selon l'invention, ce brûleur comprend plus précisément, disposés coaxialement les uns aux autres:
- un corps tubulaire réalisé, de préférence, en un matériau thermiquement isolant, ce corps présentant une extrémité ouverte sur laquelle vient se monter coaxialement l'optique associée au brûleur;
- une buse de prélèvement qui prolonge ledit corps à partir de sa deuxième extrémité en délimitant une chambre d'admission ouverte à l'extérieur;
- une jupe tubulaire solidaire du corps et formant, avec celui-ci, au moins un canal axial (canal de désembuage) débouchant d'un côté, au voisinage de l'optique et communiquant, de l'autre côté, avec la chambre d'admission grâce à un orifice calibré, et une chambre d'aspiration située de préférence dans une région opposée audit canal et débouchant au voisinage de l'optique, cette chambre étant raccordée à des moyens d'aspiration grâce à un orifice latéral prévu dans le corps;
- une collerette radiale solidaire du corps et/ou de la jupe, au travers de laquelle passe une cheminée tubulaire qui s'étend coaxialement dans le corps, sur une partie de sa longueur, cette collerette constituant un pont de conduction thermique calibré entre ledit corps et ladite cheminée;
- une buse d'admission de la composition gazeuse qui s'étend à l'intérieur de la chambre d'admission, pour venir s'emmancher partiellement dans la cheminée en réalisant, avec celle-ci, une chambre annulaire intercalaire fermée d'un côté et qui débouche, de l'autre côté, dans le volume intérieur de la cheminée, au niveau d'une chambre de combustion, cette chambre annulaire étant reliée à une source de gaz combustible à débit constant grâce à un conduit d'admission;
- un capillaire d'admission de la composition gazeuse à analyser, raccordé à la buse d'admission, au niveau de son extrémité située dans la chambre d'admission, ce capillaire étant de préférence coudé de manière à interdire la transmission de la lumière ambiante vers la chambre de combustion.

Les particularités du brûleur précédemment défini apparaîtront clairement à la lecture de la description ci-après, d'un mode d'exécution de l'invention illustré par les dessins annexés dans lesquels:

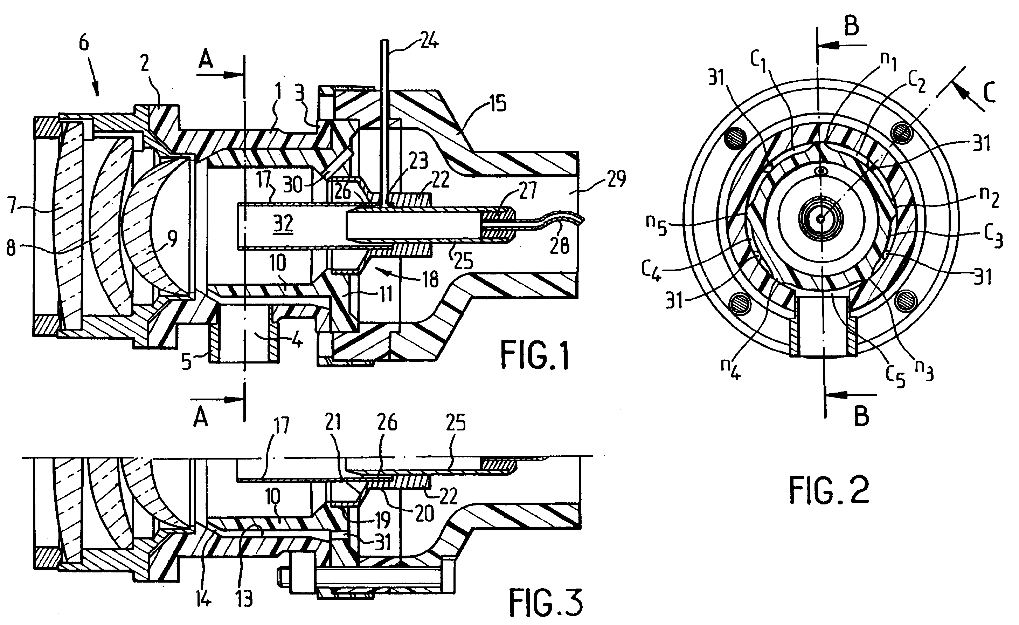

La figure 1 est une coupe axiale (selon BB de la figure 2) d'un brûleur selon l'invention, servant à l'analyse de l'air ambiant et utilisant de l'hydrogène en tant que gaz combustible;
La figure 2 est une coupe transversale selon AA de la figure 1;
La figure 3 est une demi-coupe axiale dans le plan C de la figure 2; et
Les figures 4, 5 et 6 sont des vues, partiellement en coupe axiale, de trois variantes respectives de l'âme du brûleur incluant la cheminée, la buse d'admission et le capillaire d'admission de la composition gazeuse à analyser.

Tel que représenté sur ces dessins, le brûleur comprend tout d'abord un corps 1 consistant en un tronçon tubulaire sensiblement cylindrique dont les extrémités 2, 3 sont bordées par deux rebords circulaires radialement en saillie et dont la paroi cylindrique est munie d'un orifice 4 muni d'un embout de raccordement radial 5, destiné à être raccordé à une turbine d'aspiration, par exemple au moyen d'un tube souple. Avantageusement, le corps 1 sera réalisé en une matière plastique thermiquement isolante et résistant à la chaleur (par exemple une température de l'ordre de 260°C à 300°C). Une telle matière plastique peut être trouvée sur le marché sous les marques "Torlon" ou "Vespel".

Sur l'extrémité 2 vient se fixer un montage optique 6 constitué par trois lentilles 7, 8, 9, coaxial audit corps 1 et dont le foyer est situé en un emplacement déterminé de l'axe de ce corps 1.

A l'intérieur du corps 1 vient s'emboîter une jupe tubulaire 10, de forme cylindrique, réalisée en même matière que le corps et terminée d'un côté par un collet 11 qui vient s'appliquer, avec étanchéité, contre le rebord équipant l'extrémité 3 du corps 1. Dans cet exemple, la surface extérieure de la jupe 10 qui s'étend parallèlement et à faible distance de la paroi intérieure 13 du corps 1, présente cinq nervurations axiales n₁ à n₅, radialement en saillie, en contact étanche avec la paroi intérieure 13.

Ces nervures axiales n₁ à n₅ délimitent donc cinq canaux axiaux dont quatre C₁ à C₄ forment des canaux de désembuage dont le rôle sera défini ci-après et un cinquième canal C₅, qui communique avec l'orifice 4 et qui sert donc de chambre d'aspiration.

Les canaux C₁ à C₅ sont refermés d'un côté par le collet 11 et débouchent, de l'autre côté, par une portée légèrement oblique 14 orientée sensiblement tangentiellement à la face concave de la lentille 9 et à proximité de celle-ci.

Sur l'ensemble formé par le rebord formé par l'extrémité 3 du corps 1 et le collet 11, vient se monter, par son extrémité de plus grand diamètre, une buse de prélèvement 15 en forme d'entonnoir qui prolonge coaxialement le corps 1 en délimitant une chambre d'admission 16. Cette buse 15 pourra être avantageusement réalisée en un plastomère de type polytétrafluoréthylène (PTFE, FEP) ou analogue.

A l'intérieur du volume intérieur délimité par la jupe 10, est disposée coaxialement une cheminée 17, de forme cylindrique, fixée par son extrémité opposée à l'optique 6, à la base du collet 11, grâce à une pièce de liaison tubulaire 18 comprenant:
- un premier manchon cylindrique 19 solidarisé au collet 11;
- un second manchon cylindrique 20 de plus petit diamètre dans lequel vient s'emmancher la cheminée 17;
- une portion conique 21 reliant le premier et le second manchons 19, 20; et
- un troisième manchon cylindrique 22 qui prolonge le deuxième manchon 20 et présente un diamètre intérieur légèrement inférieur à celui de ce dernier.

La cheminée 17 et le manchon 20 présentent, dans leur zone d'emboîtement, un orifice traversant 23, connecté à un tube capillaire radial 24 qui passe au travers de la buse de prélèvement 15, de manière à pouvoir être raccordé à un tube d'admission d'hydrogène relié à un générateur d'hydrogène à débit constant.

Dans le troisième manchon cylindrique 22 vient s'emmancher une buse d'admission 25 qui s'engage à l'intérieur de la cheminée 17, sur une fraction de celle-ci, en réalisant une chambre annulaire intercalaire 26 dans laquelle débouche l'orifice d'admission d'hydrogène 23. Cette buse 25 s'étend, par ailleurs, à l'intérieur de la chambre d'admission 16 et se termine dans celle-ci par une extrémité refermée par un bouchon 27 traversé par un tube capillaire coudé 28 débouchant à l'extérieur sensiblement au niveau de l'orifice 29 de la buse de prélèvement 15.

Des passages calibrés 30, 31 formés dans le collet 11 de la jupe 10 sont prévus de manière à mettre respectivement en communication la chambre d'admission 16 avec les canaux de désembuage C₁ à C₄ et le volume compris entre la cheminée 17 et la jupe 10.

Le fonctionnement du brûleur précédemment décrit est alors le suivant:

La mise en route de la turbine engendre, à l'intérieur du corps 1, une dépression qui provoque une aspiration d'air par les canaux de désembuage C₁ à C₄, par le canal d'allumage 30 et par le capillaire d'admission d'air 28.

Parallèlement, la mise en oeuvre du générateur d'hydrogène provoque une injection d'hydrogène, à débit constant, dans le volume intercalaire 26.

Les flux d'air et d'hydrogène débouchant respectivement de la buse d'admission 25 et du volume intercalaire 26, se mélangent intimement, à l'intérieur de la chambre de combustion 32 formée par la cheminée 17. Les débits d'air d'analyse et d'hydrogène sont réglés de manière à obtenir dans la chambre de combustion 32, un mélange gazeux dans lequel l'hydrogène est en excès.

L'allumage de ce mélange est obtenu grâce à un allumeur à étincelles ou même à fil incandescent agissant dans une zone située légèrement au-delà de la cheminée 17, sur l'axe de symétrie du corps 1. Le courant d'air provenant du canal d'allumage 30 permet alors d'avoir dans cette zone un mélange gazeux dans lequel l'air est en excès, et qui est, par conséquent, propice à l'allumage.

Une fois l'allumage effectué, la flamme se stabilise dans la chambre de combustion 32 (et donc à l'intérieur de la cheminée 17), en un emplacement situé en retrait du foyer du montage optique.

Bien entendu, cette combustion engendre un chauffage intense de la cheminée 17 qui, en conséquence, est réalisée en un alliage métallique approprié tel que de l'"inconel".

Il s'avère que pour s'affranchir d'un certain nombre de problèmes, tels que la formation de buée sur la surface concave de la lentille 9, le givrage de l'orifice d'évacuation 4 lorsque l'appareil est utilisé dans un milieu à très basse température, la contamination du capillaire 28 et de la buse d'admission 25 du gaz à analyser, par des matières en suspension contenant l'élément recherché, la partie intérieure ou âme du brûleur et, en particulier, la buse 25, la cheminée 17 et le capillaire 28, doivent être aussi chauds que possible.

A cet effet, l'épaisseur du corps 1, de la jupe 10 et de la buse de prélèvement 15, est relativement importante de manière à ce que, du fait de la faible conductibilité thermique de la matière plastique utilisée, les déperditions thermiques soient rendues minimales.

Par ailleurs, la portion conique 21 de la pièce de liaison tubulaire 18 présente une épaisseur aussi faible que possible, de manière à réduire autant que possible le pont de conduction thermique entre la cheminée 17 et le corps 1.

En outre, le bouchon 27 qui referme la buse 25 est réalisé en un matériau thermiquement bon conducteur pour assurer le chauffage du capillaire 28. Celui-ci devra, bien entendu, être réalisé en un matériau thermiquement bon conducteur ou, dans la négative, être recouvert par un revêtement thermiquement bon conducteur.

Grâce à ces dispositions, les éléments contaminables du brûleur sont portés à une température suffisante pour dissocier et/ou évaporer les matières contaminantes qui s'y seraient éventuellement déposées et qui, autrement, risqueraient de fausser les mesures.

Par ailleurs, le flux d'air circulant à l'intérieur du brûleur se trouve suffisamment réchauffé pour éliminer tout risque de givrage dû à la haute teneur en vapeur d'eau du gaz résultant de la combustion.

Grâce au fait qu'elle est isolée du gaz de combustion par les flux d'air issus des canaux de désembuage C₁ à C₄, la lentille 9 ne sera pas sujette à des dépôts de vapeur d'eau.

Le risque d'une perturbation des mesures par de la lumière parasite est supprimé grâce au coudage du capillaire 28 qui forme une chicane interdisant le passage de la lumière. En outre, les réflexions parasites pourront être supprimées en adoptant une coloration noire pour les principales pièces du brûleur et, en particulier, le corps 1 et la buse de prélèvement 15.

Bien entendu, l'invention ne se limite pas aux modes d'exécution précédemment décrits.

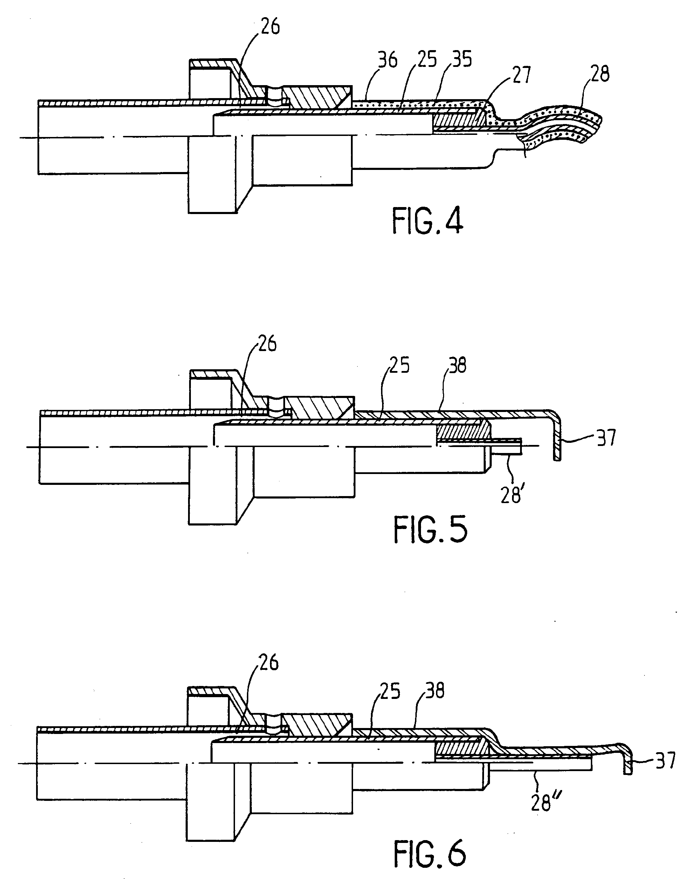

Ainsi, par exemple, le capillaire 28, de forme coudée, pourrait être recouvert ainsi que la portion de buse 25 située dans la chambre d'admission 15, par un enroulement 35 réalisé à l'aide d'un fil en métal bon conducteur de chaleur, tel que du cuivre, cet enroulement portant un enrobage 36 par exemple en résine (figure 4).

Selon un autre mode d'exécution, le capillaire 28' s'étend coaxialement à la buse 25 et est relativement court. Dans ce cas, la propagation de la lumière ambiante à l'intérieur du capillaire 28' ainsi que sa protection contre les poussières, pourront être assurées grâce à un déflecteur 37 masquant l'orifice du capillaire 28' et porté par un support axial 38 solidaire de la buse 25 (figure 5). Dans le cas d'une buse droite de plus grande longueur 28'', le support axial 38 pourra être réalisé en une matière bonne conductrice de chaleur enveloppant au moins partiellement ladite buse 25 et ledit capillaire 28'' (figure 6).

Un avantage important de la structure précédemment décrite, réside dans la combinaison originale des circuits d'admission d'hydrogène et de gaz à analyser qui débouchent axialement dans une chambre de combustion coaxiale 32, le circuit d'admission de gaz étant réduit à sa plus simple expression. Cette combinaison permet au brûleur d'atteindre très rapidement ses conditions optimales de fonctionnement et on obtient ainsi des temps de réponse très courts. En outre, grâce au fait que le volume intérieur du corps ne communique avec l'extérieur qu'avec des circuits d'admission formés par des capillaires engendrant d'importantes pertes de charge, on s'affranchit des perturbations occasionnées par le vent.

## Revendications

1. Brûleur utilisable dans un appareil pour l'analyse d'une composition gazeuse par spectrométrie de flamme,
caractérisé en ce qu'il comprend, disposés coaxialement les uns aux autres:
- un corps tubulaire (1) présentant une première extrémité ouverte (2) sur laquelle est monté coaxialement un système optique (6) et un volume intérieur connecté à des moyens d'aspiration;
- une buse de prélèvement (15) qui prolonge ledit corps (1) à partir de sa deuxième extrémité (3) en délimitant une chambre d'admission (16) ouverte à l'extérieur;
- une jupe tubulaire (10) montée coaxialement dans le corps (1) et formant, à l'intérieur de celui-ci, au moins un canal axial de désembuage (C₁ à C₄) débouchant d'un côté au voisinage du système optique (6) et communiquant, de l'autre côté, avec la chambre d'admission, grâce à un orifice calibré (31) et une chambre d'aspiration (C₅) située, de préférence, dans une région opposée audit canal (C₁ à C₄) et débouchant également au voisinage du système optique (6), cette chambre (C₅) étant destinée à être raccordée à des moyens d'aspiration grâce à un orifice latéral (4) prévu dans le corps (1);
- une collerette radiale (18) solidaire du corps (1), au travers de laquelle passe une cheminée tubulaire (17) qui s'étend coaxialement à l'intérieur du corps (1), sur une partie de sa longueur;
- une buse d'admission de la composition gazeuse (25) qui s'étend à l'intérieur de la chambre d'admission (16), pour venir s'emmancher partiellement dans la cheminée (17), en réalisant avec celle-ci une chambre annulaire intercalaire (26) fermée d'un côté et qui débouche, de l'autre côté, dans le volume intérieur de la cheminée (17) au niveau de la chambre de combustion (32), cette chambre annulaire (26) étant reliée à une source de gaz combustible à débit constant grâce à un conduit d'admission (24); et
- un capillaire d'admission (28) de la composition gazeuse à analyser, ce capillaire (28) étant raccordé à la buse d'admission (25), au niveau de son extrémité située dans la chambre d'admission (16).

2. Brûleur selon la revendication 1,
caractérisé en ce qu'il comprend en outre une jupe tubulaire (10) montée coaxialement dans le corps (1) et formant, à l'intérieur de celui-ci, au moins un canal axial de désembuage (C₁ à C₄) débouchant d'un côté au voisinage du système optique (6) et communiquant, de l'autre côté, avec la chambre d'admission, grâce à un orifice calibré (31) et une chambre d'aspiration (C₅) située, de préférence, dans une région opposée audit canal (C₁ à C₄) et débouchant également au voisinage du système optique (6), cette chambre (C₅) étant destinée à être raccordée à des moyens d'aspiration grâce à un orifice latéral (4) prévu dans le corps (1).

3. Brûleur selon l'une des revendications 1 et 2,
caractérisé en ce que le susdit corps (1), la susdite jupe (10) et la susdite buse de prélèvement (15) sont réalisés en une matière thermiquement isolante.

4. Brûleur selon l'une des revendications précédentes,
caractérisé en ce que la susdite collerette radiale (18) est conçue de manière à présenter une forte résistance thermique entre le corps (1) et/ou la jupe (10) et la cheminée (17).

5. Brûleur selon l'une des revendications précédentes,
caractérisé en ce que le susdit canal axial (C₁ à C₄) comprend une sortie orientée obliquement vers le système optique (6).

6. Brûleur selon l'une des revendications précédentes,
caractérisé en ce qu'il comprend des moyens d'allumage situés au voisinage de la chambre de combustion (32), et en ce que le volume intercalaire (26) compris entre la susdite jupe (10) et la susdite cheminée (17) communique avec la chambre d'admission, grâce à un canal d'allumage calibré (30).

7. Brûleur selon l'une des revendications précédentes,
caractérisé en ce qu'il comprend des moyens permettant d'interdire le passage de rayons lumineux parasites au travers du susdit capillaire (28).

8. Brûleur selon la revendication 7,
caractérisé en ce que les susdits moyens d'interdiction consistent en un coude formé sur le capillaire (28).

9. Brûleur selon l'une des revendications 1 à 7,
caractérisé en ce que les susdits moyens d'interdiction consistent en un déflecteur (37) disposé au droit de l'orifice extérieur du capillaire (28).

10. Brûleur selon l'une des revendications précédentes,
caractérisé en ce qu'il comprend des moyens permettant de favoriser des transferts de chaleur entre la buse (25) et le capillaire (28).

11. Brûleur selon la revendication 10,
caractérisé en ce que les susdits moyens de transfert de chaleur consistent en un enroulement (35) réalisé à l'aide d'un fil en matériau bon conducteur de chaleur, éventuellement recouvert par un enrobage (36).

12. Brûleur selon la revendication 10,
caractérisé en ce que les susdits moyens de transfert de chaleur consistent en un élément axial réalisé en une matière bonne conductrice de chaleur, qui enveloppe au moins partiellement ladite buse (25) et ledit capillaire (28) et qui sert éventuellement de support à un déflecteur (37) situé en regard de l'orifice dudit capillaire (28).

## Claims

1. A burner usable in an apparatus for analyzing a gas composition by flame spectrometry, characterized in that it comprises, disposed coaxially with respect to each other :
- a tubular body (1) having a first open end (2) on which an optical system (6) is mounted coaxially and an inner volume connected to suction means ;
- a sample taking nozzle (15) which extends said body (1) from its second end (3) while defining an intake chamber (16) open outwardly ;
- a tubular skirt (10) mounted coaxially in the body (1) and forming thereinside at least one axial demisting channel (C₁ to C₄) opening on one side, in the vicinity of the optical system (6) and communicating on the other side with the intake chamber through a calibrated orifice (31), and a suction chamber (C₅) situated preferably in a region opposite said channel (C₁ to C₄) and also opening in the vicinity of the optical system (6), this chamber (C₅) being intended to be connected to suction means through a lateral orifice (4) provided in the body (1) ;
- a radial collar (18) fast with the body (1) through which passes a tubular chimney (17) which extends coaxially in the body (1), over a part of its length ;
- a nozzle (25) for the intake of the gas composition which extends inside the intake chamber (16) and is fitted partially in the chimney (17), while forming therewith an annular intercalary chamber (26) closed on one side and which opens on the other side into the inner volume of the chimney (17) at the level of the combustion chamber (32), this annular chamber (26) being connected to a constant flow fuel gas source through an intake duct (24); and
- a capillary tube (28) for intake of the gas composition to be analyzed, this capillary tube (28) being connected to the intake nozzle (25) at the level of its end situated in the intake chamber (16).

2. The burner as claimed in claim 1, characterized in that it further comprises a tubular skirt (10) mounted coaxially in the body (1) and forming thereinside at least one axial demisting channel (C₁ to C₄) opening on one side in the vicinity of the optical system (6) and communicating on the other side with the intake chamber through a calibrated orifice (31) and a suction chamber (C₅) situated preferably in a region opposite said channel (C₁ to C₄) and also opening in the vicinity of the optical system (6), this chamber (C₅) being intended to be connected to suction means through a lateral orifice (4) provided in the body (1).

3. The burner as claimed in one of claims 1 and 2, characterized in that said body (1), said skirt (10) and said sample taking nozzle (15) are made from a heat insulating material.

4. The burner as claimed in one of the preceding claims, characterized in that said radial collar (18) is adapted so as to have high heat resistance between the body (1) and/or the skirt (10) and the chimney (17).

5. The burner as claimed in one of the preceding claims, characterized in that said axial channel (C₁ to C₄) comprises an outlet oriented obliquely towards the optical system (6).

6. The burner as claimed in one of the preceding claims, characterized in that it comprises ignition means situated in the vicinity of the combustion chamber (32) and in that the intercalary volume (26) between said skirt (10) and said chimney (17) communicates with the intake chamber through a calibrated ignition channel (30).

7. The burner as claimed in one of the preceding claims, characterized in that it comprises means for preventing the passage of parasite light rays through said capillary tube (28).

8. The burner as claimed in claim 7, characterized in that said prevention means are formed by a bend in the capillary tube (28).

9. The burner as claimed in one of claims 1 to 7, characterized in that said prevention means consist of a deflector (37) disposed in line with the external orifice of the capillary tube (28).

10. The burner as claimed in one of the preceding claims, characterized in that it comprises means for promoting heat transfers between the nozzle (25) and the capillary tube (28).

11. The burner as claimed in claim 10, characterized in that said heat transfer means consist of a winding (35) made from a good heat conducting material wire, possibly covered with a coating (36).

12. The burner as claimed in claim 10, characterized in that said heat transfer means consist of an axial element made from a good heat conducting material which envelopes said nozzle (25) and said capillary tube (28) at least partially and which possibly serves as a support for a deflector (37) situated opposite the orifice of said capillary tube (28).

## Patentansprüche

1. Brenner zum Gebrauch in einer Vorrichtung zum flammenspektralphotometrischen Analysieren einer Gaszusammensetzung dadurch gekennzeichnet, daß dieser aus folgenden Teilen besteht, die koaxial zueinander angeordnet sind:
- einem röhrenförmigen Korpus (1), der ein erstes offenes Ende (2) aufweist, an dem koaxial ein optisches System (6) montiert ist, und einen Innenraum, der an Ansaugvorrichtungen angeschlossen ist;
- eine Entnahmedüse (15), die den Korpus (1) ausgehend von dessen zweiten Ende (3) verlängert und dabei eine Einlaßkammer (16) begrenzt, die nach außen offen ist;
- einem röhrenförmigen Mantel (10), der koaxial im Korpus (1) montiert ist und in dessen Innern mindestens einen Längskanal zur Feuchtigkeitsableitung (C1 bis C4) bildet, die auf einer Seite in der Nähe des optischen Systems (6) enden und auf der anderen Seite mit der Einlaßkammer verbunden sind über eine kalibrierte Öffnung (31) und eine Ansaugkammer (C5), die vorzugsweise in einem Bereich gegenüber dem Kanal (C1 bis C4) liegt und ebenfalls in der Nähe des optischen Systems (6) mündet, wobei diese Kammer (C5) dazu bestimmt ist, mit Hilfe einer seitlichen Öffnung (4), die am Korpus vorgesehen ist, an Ansaugvorrichtung angeschlossen zu werden;
- einem fest mit dem Korpus (1) verbundenen runden Kragen, durch den ein kleines Rohr verläuft (17), das sich koaxial im Innern des Korpus (1) über einen Teil seiner Länge erstreckt;
- einer Einlaßdüse für die Gaszusammensetzung (25), die sich im Innern der Einlaßkammer (16) befindet und teilweise in das kleine Rohr (17) hineinführt, so daß sie mit diesem eine ringförmige Zwischenkammer (26) bildet, die auf der einen Seite geschlossen ist und die auf der anderen Seite auf Höhe der Brennkammer (32) in den Innenraum des kleinen Rohrs (17) führt; diese ringförmige Kammer (26) ist über eine Zufuhrleitung (24) an eine Gasquelle mit konstanter Abgabemenge angeschlossen; und
- einer Zufuhrkapillare für die zu analysierende Gaszusammensetzung (28), wobei diese Kapillare (28) auf Höhe des in der Einlaßkammer (16) liegenden Endes an die Einlaßdüse (25) angeschlossen ist.

2. Brenner nach Anspruch 1, dadurch gekennzeichnet, daß er darüber hinaus einen röhrenförmigen Mantel (10) umfaßt, der koaxial im Korpus (1) montiert ist und in dessen Innern mindestens einen Längskanal zur Flüssigkeitsableitung (C1 bis C4) bildet, der auf der einen Seite in der Nähe des optischen Systems (6) endet und auf der anderen Seite mit der Einlaßkammer verbunden ist über eine kalibrierte Öffnung (31) und eine Ansaugkammer (C5), die vorzugsweise in einem Bereich gegenüber dem Kanal (C1 bis C4) liegt und ebenfalls in der Nähe des optischen Systems (6) endet, wobei diese Kammer (C5) dazu bestimmt ist, mit Hilfe einer seitlichen Öffnung (4), die am Korpus (1) vorgesehen ist, an Ansaugvorrichtung angeschlossen zu werden.

3. Brenner nach einem der Ansprüche 1 und 2, dadurch gekennzeichnet, daß der Korpus (1), der Mantel (10) und die Entnahmedüse (15) aus einem wärmeisolierenden Material hergestellt sind.

4. Brenner nach einem der vorstehenden Ansprüche, dadurch-gekennzeichnet, daß der runde Kragen (18) so konzipiert ist, daß er einen hohen Wärmewiderstand zwischen dem Korpus (1) und/oder dem Mantel (10) und dem Kanal (17) aufweist.

5. Brenner nach einem der vorstehenden Ansprüche, dadurch gekennzeichnet, daß der Längskanal (C1 bis C4) einen Auslaß umfaßt, der schräg zum optischen System (6) ausgerichtet ist.

6. Brenner nach einem der vorstehenden Ansprüche, dadurch gekennzeichnet, daß er Zündvorrichtungen umfaßt, die in der Nähe der Brennkammer (32) sitzen, und dadurch, daß der Raum (26) zwischen dem Mantel (10) und dem Kanal (17) über einen kalibrierten Zündkanal (30) mit der Einlaßkammer verbunden ist.

7. Brenner nach einem der vorstehenden Ansprüche, dadurch-gekennzeichnet, daß er Vorrichtungen umfaßt, mit denen der Durchtritt von störenden Lichtstrahlen durch die Kapillare (28) verhindert werden.

8. Brenner nach Anspruch 7, dadurch gekennzeichnet, daß die Sperrvorrichtungen aus einem Winkelstück über der Kapillare bestehen.

9. Brenner nach einem der Ansprüche 1 bis 7, dadurch gekennzeichnet, daß die Sperrvorrichtungen aus einem Deflektor (37) bestehen, der an der äußeren Öffnung der Kapillare (28) angeordnet ist.

10. Brenner nach einem der vorstehenden Ansprüche, dadurch gekennzeichnet, daß er Vorrichtungen umfaßt, mit denen die Wärmeübertragung zwischen der Düse (25) und der Kapillare (28) begünstigt wird.

11. Brenner nach Anspruch 10, dadurch gekennzeichnet, daß die Wärmeübertragungsvorrichtung aus einer Wicklung (35) bestehen, die mit Hilfe eines Drahtes aus gut wärmeleitendem Material gefertigt wird, das eventuell mit einer Beschichtung überzogen ist.

12. Brenner nach Anspruch 10, dadurch gekennzeichnet, daß die Wärmeübertrangungsvorrichtungen aus einem axialen Element bestehen, das aus einem gut wärmeleitenden Material gefertigt wird, das die Düse (25) und die Kapillare (28) zumindest teilweise bedeckt, und das gegebenenfalls als Halter für einen Deflektor (37) dient, der an der Öffnung der Kapillare (28) sitzt.
